# EUROPEAN PATENT SPECIFICATION

(11) **EP 2 724 602 B1**
(45) Date of publication and mention of the grant of the patent: **05.10.2016**
(21) Application number: 12190118.5
(22) Date of filing: 26.10.2012
(51) Int. Cl.: A01D 34/416

(54) **A rotary cutting head system**
System mit rotierendem Schneidkopf
Système de tête de coupe rotative

(43) Date of publication of application: 30.04.2014
(73) Proprietor: Black & Decker Inc., Newark, Delaware 19711 (US)
(72) Inventor: Wadge, Brian, Coxhoe, Durham DH6 4SP (GB); Walmsley, Neil, Ferryhill, Durham DL17 8BQ (GB)
(74) Representative: Stentiford, Andrew Charles

(56) References cited:
- WO-A1-99/40773
- BE-A3- 1 015 509
- GB-A- 2 483 147
- US-A- 3 831 278
- US-A- 5 170 561
- US-A- 5 303 476

## Description

The present invention relates to a rotary cutting head system for a vegetation cutting device. In particular the present invention relates to a rotary cutting head system for a vegetation cutting device for use with a filament piece.

Vegetation cutting devices such as string trimmers are known power operated tools for cutting grass and other foliage and vegetation. Typically string trimmers are powered by petrol or electricity and an engine or motor drives a cutting head. The cutting head can comprise one or more rotating blades, in which case the trimmer is generally known as a brush cutter or one or more rotating lines or filaments, in which case it is known as a string trimmer.

In some known arrangements the motor is configured to rotate the cutting head and the rotating lines or filaments are fixed with respect to the cutting head. The cutting head and rotating lines will typically rotate at several thousand revolutions per minute. The rotating lines are typically a flexible polymer filament or other string like material. In this way the filament will cut vegetation as the rotating filaments impact on the vegetation and break the structure of the vegetation.

During operation a user may operate a string trimmer near a solid physical structure like the edge of a house, a concrete block or other solid obstacle. In some circumstances, a portion of the filament can break off when the end of the cutting filament impacts against the solid object. This means that the swath of the string trimmer will be reduced when the filament is shortened and the amount of vegetation that can cut per revolution of the cutting head will be reduced.

In order to maintain the length of filament and the swath of the string trimmer, known vegetation devices have mechanisms to feed out more filament. The filament can be housed on a spool in the rotary cutting head and as the filament is consumed, more replacement filament can be provided. Some mechanisms can be automatically feed out filament or alternatively some mechanisms allow the user to manually feed out filament.

The type of vegetation which the filament can cut will depend on several factors. For example factors which will affect the cutting ability of the string trimmer include the speed of rotation, the length of the swath, the diameter of the filament, the mass of the filament, and the material of the filament. In some circumstances the user may want to cut denser vegetation than is possible with a spool-fed filament string trimmer. Typically the diameter of filament which is stored on a spool is limited by the size of the spool and the size of the cutting head. However, a filament over a certain diameter is not suitable for being wound on a spool.

Some known string trimmers can be used with filament pieces fixed with respect to the cutting head. The filament pieces can be predetermined lengths of filament and can be a higher mass per unit length than the filament wound on a spool. For example the filament pieces can be thicker. A filament piece can also have profiled edges to provide cutting regions such as serrated edges. The filament piece is therefore more suitable for cutting heavy vegetation than spool fed filaments.

It is known to operate string trimmers which can be fitted with both a spool fed filament cutting head and filament piece cutting head. The user is typically provided with two interchangeable cutting heads which can be fitted to the same string trimmer. This allows the user to select the cutting head and type of filament which best suits his gardening needs.

As mentioned the filament piece has a higher mass per unit length, and this means it can withstand a greater force than the spool fed filament. However filament pieces can still break if the filament pieces are subjected to sufficiently high impact forces. For example portions of the filament piece can break if the user consistently operates the string trimmer against solid immovable objects such as brickwork or fence posts.

From time to time the user will need to be able to replace the filament piece. The filament piece needs to be secured to the rotary cutting head while at the same time the filament piece needs to be replaceable by the user.

US 5979064 discloses a cutting head which grips a filament piece by weaving the filament through eyelets and under and over hooks. However, the user can install the filament piece incorrectly which can lead to the cutting head being unbalanced. An unbalanced cutting head can damage the motor because the string trimmer will experience vibrations as the cutting head rotates. The vibrations can damage the motor and the user also experience discomfort gripping the handle of the string trimmer. Furthermore, the user can insert the incorrect sized filament in the cutting head. If the user installed a filament which was too thin, then the filament can slip out of the cutting head during use and snag around other parts of the string trimmer. This can cause damage and is a nuisance for the user to unravel.

EP 1587358 discloses a cutting head with a moveable clamp piece which grips a filament piece against the side of an internal passageway. The moveable clamp piece is biased towards the internal passageway and the path along which the clamp moves is at an angle to the internal passageway. This means that the moveable clamp piece provides a directional gripping force so that the filament piece is prevented from slipping out during use. When the filament piece needs replacing, the user pulls the filament piece in a direction opposite to the gripping direction to overcome the biasing force of the clamp and release the filament piece.

However the arrangement of EP1587358 means that the moveable clamp piece can become clogged with debris such as cut grass or mud. This can make the clamp piece difficult to move when removing the filament piece. Furthermore a user can install the filament piece incorrectly. For example the user can insert too little or too much of the filament piece this means that because the user can inadvertently unbalance the cutting head by placing the one or more of the filament pieces in the wrong place.

GB2483147 discloses another cutting head which has a mounting portion to be clamped around a serrated edged portion of filament piece. The mounting portion comprises a reciprocal cavity for accommodating the serrated profile of the filament piece. The mounting portion is then clipped into the cutting head in a clamping portion. The mounting portion is configured to open and allow the user to reuse it and install a new filament piece.

However the user can still install the incorrect filament piece in the mounting portion. This means that the user can use incorrectly rated filament piece for the string trimmer. For example if the user fits filament piece having too mass which is too high, then the motor can be damaged. The user can also mount the filament piece off centre, which can again create an unbalanced cutting head. The mounting portion is also difficult to access because resilient clips have to be moved before the mounting portion is released, particularly if the cutting head is soiled or not. This may mean the user has to use a tool to extract the mounting portion from the resilient clips. The resilient clips are susceptible to wear and can break off from the cutting head requiring the user to purchase another cutting head.

A rotary cutting head for a filament which is better balanced and more durable is desirable. The present invention according to claims 11 and 12 aims to address the aforementioned problems.

According to claim 1 in an embodiment of the present invention there is a rotary cutting head system for a vegetation cutting device comprising; a cutting filament insert having a cutting filament and an anchor mounted thereto, a cap comprising: a base and a peripheral wall having at least one through hole for receiving the cutting filament, characterised in that there is also provided a protruding element on the anchor and a slot mounted on the cap for retaining the protruding element of the anchor, wherein when the cutting filament insert is mounted in the cap, the protruding element of the anchor is configured to slide into the slot and to prevent lateral movement of the anchor towards the at least one through hole and to allow the anchor to slide along a path substantially parallel with the axis of rotation of the rotary cutting head.

The cutting filament insert comprises the anchor having a protruding element which couples with the slot. Preferably the anchor is located in the centre of the length of the cutting filament. The anchor can be fixed with respect to the cutting filament during manufacture and the anchor can be precisely located in the centre of the cutting filament. In some embodiments the anchor can be mounted on the cutting filament in another position for example off-centre or at the end of the cutting filament. The anchor can be accurately positioned and secured in the rotary cutting head during use. In this way the user can install a cutting filament and avoid incorrectly locating the cutting filament in the cutting head. Predetermining the location of the anchor with respect to the cutting filament and the cutting head means that the balancing of the cutting head can be determined during design and manufacture of the vegetation cutting device. This leads to a more balanced cutting head when the user installs and uses the filament piece which reduces the damage to the motor.

When the cutting head is correctly balanced the user will not continue to use the vegetation cutting device if the string trimmer becomes unbalanced during use (for example a portion of the filament breaks off). Indeed, the user will be able to identify when the string trimmer is unbalanced because he will detect vibrations during use and, this will indicate that the cutting filament has broken and a new cutting filament should be installed. This avoids the scenario where the user is expected to install the filament himself and installs the filament off centre and causes the cutting head to be unbalanced from the outset. A user would then not know when the filament needed replacing.

Since the slot and the protruding element prevent lateral movement of the anchor with respect to the openings in the peripheral wall, the rotary cutting head will be balanced with respect to the length of cutting filament in use. However, the anchor can still move with respect to the rotary cutting head along a path parallel with the axis of rotation of the rotary cutting head and this means the cutting filament is easier to install and remove. The user does not have to bend portions of the rotary cutting head or need tools to remove the cutting filament insert. This makes the rotary cutting head more durable and easier to use.

The location of the anchor and the slot can be accurately predetermined. Alternatively the retaining means comprises a protruding element and the anchor comprises a reciprocal slot. The coupling means are suitable for preventing lateral movement of the anchor with respect to the holes in the peripheral walls but still allow the anchor to move with respect to the rotary cutting head along a path parallel with respect to the axis of rotation of the rotary cutting head. The coupling interaction between the slot and the protruding element means that the anchor can be fixed with respect to the cap by solely the protruding element. Typically the protruding element is in the centre of the anchor. This means the anchor does not have to be retained at other places such as the periphery of the anchor. In this way if a filament piece does not have the anchor with a correctly shaped protruding element, it cannot be fixed to the cap. This can stop a user from trying to use incorrectly rated portions of line for the vegetation cutting device. The motor is then less likely to be damaged because the user will only use filament pieces which have been previously tested and approved for use with the vegetation cutting device.

The cap may comprise a passageway for receiving the anchor and the passageway may comprise a first wall comprising the slot. The passageway provides a clear indication to the user where the anchor should be installed. The anchor can be a generally flat shaped element so that the anchor slots snugly into the passageway. This means that interlock between the rotary cutting head and the anchor restricts two degrees of freedom of the anchor but still allows a sliding movement of the anchor for easy installation of the cutting element. For example, the slot and protruding element of the anchor restrict the movement of the anchor laterally towards the holes and at the same time the walls of the passageway restrict movement of the anchor radially away from the axis of rotation of the rotary cutting head.

Preferably a second wall of the passageway comprises a cutaway portion configured to show a portion of the anchor when the cutting filament is mounted in the cap. The second wall of the passageway may be a wall of the passageway opposite the first wall of the passageway. A cutaway portion allows a user to access the bottom of the anchor with their finger and slide the anchor out of the slot. In some embodiments the first wall is an inside wall of the passageway, closest to the axis of rotation and the second wall is an outside wall of the passageway furthest way from the axis of the rotation.

Preferably the anchor is push-fit mountable in the passageway. In this way the anchor fits snugly in the passageway and does not accidently come free from the restraining means during use or otherwise. The friction from the push fit of the anchor will restrict movement enough so the anchor is not a rattle fit in the slot, but loose enough to still allow a user to remove the anchor with their finger.

Preferably the protruding element is a rib extending along the anchor. This means that the rib prevents rotation of the anchor when mounting in the rotary cutting head. Alternatively the protruding element comprises one or more a round pegs. Preferably the pegs are suitable for sliding within the slot. Preferably the cross section of the rib is one of the following, square, rectangular, circular, dovetail, hexagonal, triangular or any other suitable shape. If the cross section of the protruding element has overlapping portions with a reciprocally shaped slot in two directions then the second wall of the passageway is not needed. For example the cross section of the rib or peg can be a dovetail shape.

Preferably the at least one hole is two holes and the cutting filament extends through both holes. This means that the rotary cutting head has a dual cutting filaments and will be balanced during use. Alternatively the rotary cutting head comprises a single hole and the rotary cutting head is balanced for the single cutting filament.

Preferably the anchor is integral with the cutting filament. This means that the anchor is fixed with respect to the cutting filament. The anchor may be overmoulded on the cutting filament. Alternatively the anchor comprises a through hole for the cutting filament and the cutting filament is threaded though the through hole and fixed in place with adhesive or crimping. The user cannot accidently install a cutting filament incorrectly and make the rotary cutting head unbalanced.

According to a first aspect of the present invention there is a cap for mounting in a rotary cutting head for a vegetation cutting device the cap comprising: a base; a peripheral wall having at least one through hole for receiving a cutting filament and characterised in that there is also provided a slot mounted on cap for retaining a cutting filament insert having a cutting filament and an anchor mounted thereto, the anchor having a protruding element, wherein the slot is configured to couple with the protruding element and to prevent lateral movement of the anchor towards the at least one through hole and to allow the anchor to slide along a path substantially parallel with the axis of rotation of the rotary cutting head.

According to another aspect there is a cutting filament insert for mounting in a cap for a rotary cutting head of a vegetation cutting device, the cap comprising a base and a peripheral wall having at least one through hole for receiving a cutting filament, the cutting filament insert comprising; a cutting filament and an anchor mounted on the cutting filament, characterised in that the anchor has a protruding element configured to slide into and couple with a slot mounted on the cap and to prevent lateral movement of the anchor towards the at least one through hole and to allow the anchor to slide along a path substantially parallel with the axis of rotation of the rotary cutting head.

Various other aspects and further embodiments are also described in the following detailed description and in the attached claims with reference to the accompanying drawings, in which:
Figure 1 shows a perspective view of the vegetation cutting device;
Figure 2 shows a perspective view of the rotary cutting head system from the underside;
Figure 3 shows a perspective view of the rotary cutting head system from the top;
Figure 4 shows a perspective view of the cutting filament insert from one side;
Figure 5 shows a perspective view of the cutting filament insert from another side;
Figure 6 shows a perspective view of an alternative embodiment of the cutting filament insert;
Figures 7 and 8 show schematic plan views of the slot and cutting filament insert according to some embodiments; and
Figure 9 shows a schematic plan view of the slot and the cutting filament insert according to another embodiment.

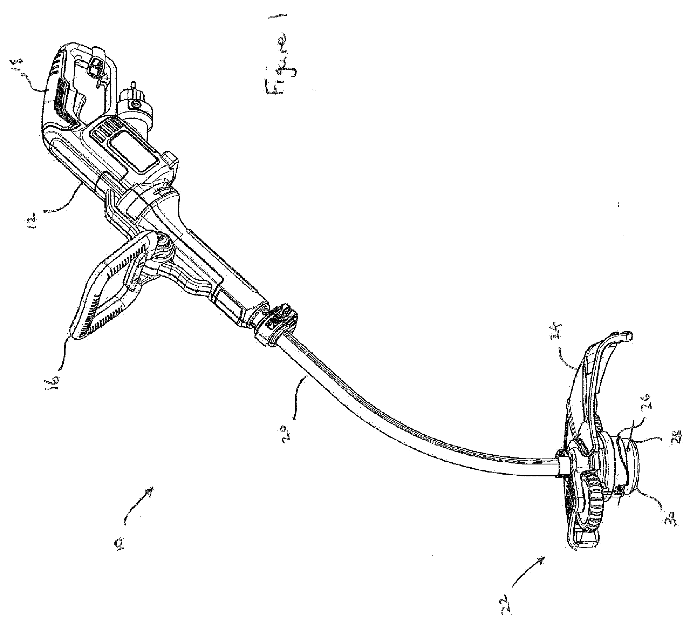

Figure 1 shows a perspective view of a vegetation cutting device 10. Typically the vegetation cutting device 10 is a string trimmer, but the vegetation cutting device can alternatively be other devices suitable for cutting vegetation like brush cutters. The vegetation cutting device 10 comprises a housing 12 for housing a motor (not shown) and other components. The housing 12 can comprise two clam shell portions which are fixed together to enclose the motor, gearbox and other components. The housing 12 has a first gripping handle 16 and a second gripping handle 18 so that the vegetation cutting device 10 can be operated with two hands by a user.

The housing 12 is rotatably coupled to a first end of a shaft 20 and a head 22 is fixed to a second end of the shaft 20. The head 22 comprises a guard 24 and a rotary cutting head 26. The rotary cutting head 26 is driven by the motor via a rotary drive shaft (not shown) housed within the shaft 20. The rotary cutting head 26 may comprise a flexible line element or cutting filament 28 which is suitable for cutting vegetation. The rotary cutting head 26 comprises a removable cap 30 which clips into the rotary cutting head 26. A portion of the cutting filament 28 will protrude from the removable cap 30 and define a swathe when the rotary cutting head 26 rotates in operation. The swath generated by the rotating cutting filament 28 lies in a cutting plane. In some alternative embodiments the motor can be housed in the head 22 which means the drive shaft does not have to be fed through the shaft 20.

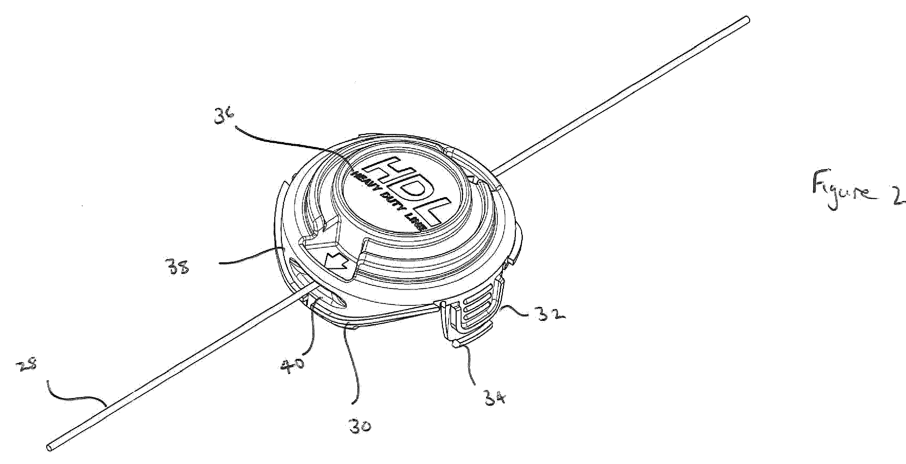

The removable cap 30 will now be discussed in further detail with respect to Figure 2. Figure 2 shows a perspective view of the removable cap 30 viewed from the underside. In use when the vegetation cutting device 10 is operated in a trimming mode the cutting plane (the plane in which the cutting filaments 28 sweep through) is substantially parallel to the ground. The vegetation cutting device 10 as shown in Figure 1 is in the trimming mode and the base 36 of the removable cap 30 is adjacent the ground.

The removable cap 30 is mountable on the rotary cutting head 26 by virtue of two tabs 32. The tabs 32 are resiliently flexible and each comprises a hook portion 34 which clips over a reciprocating ridge on the rotary cutting head 26. The user can remove the removable cap 30 from the rotary cutting head 26 by pressing in the tabs 32. This releases the hook portions 34 from the ridge and the removable cap can be separated from the rotary cutting head 26.

The removable cap comprising a peripheral wall 38 which is connected to the base 36. The base 36 is substantially circular and the peripheral wall 38 extends around the circumference of the base 36. The peripheral wall 38 comprises through holes 40 for receiving the cutting filament 28. The through holes 40 are funnelled and flare towards the outside of the removable cap 30 as the through hole 40 extends across the peripheral wall 38. The outer flared portion of the through hole 40 extends along a portion of the circumference of the peripheral wall 38. The outer flared portion of through holes 40 allows the cutting filament 28 to move in along a circumferential path. This means that the wear and the stress on the cutting filament as it bends in use is reduced. Alternatively the through holes 40 can be eyelets for receiving the cutting filament 28. The height of the through holes 40 are substantially the width or diameter of the cutting filament. The height is a dimension of the removable cap 30 which is parallel with the axis of rotation of the rotary cutting head 26. This means that the amount that the cutting filament 28 moves in a direction perpendicular to the cutting plane is limited.

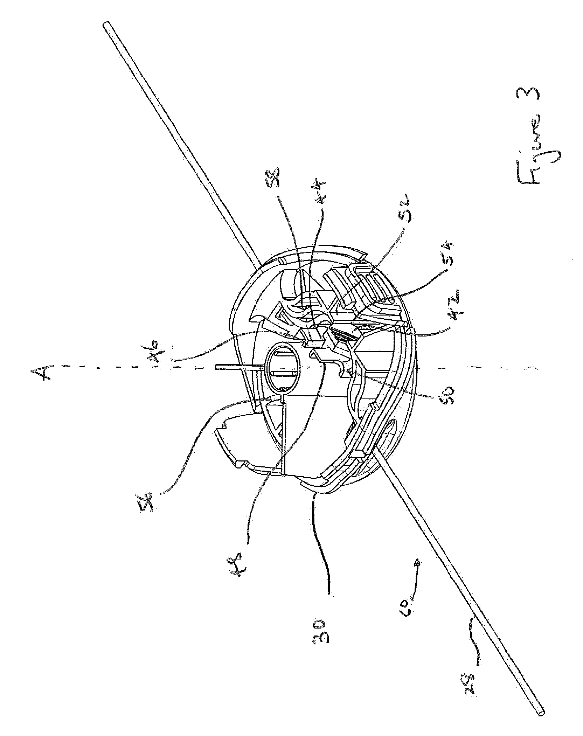

The interaction of the removable cap 30 and the cutting filament insert 60 will now be described in further detail with respect to Figures 3, 4 and 5.

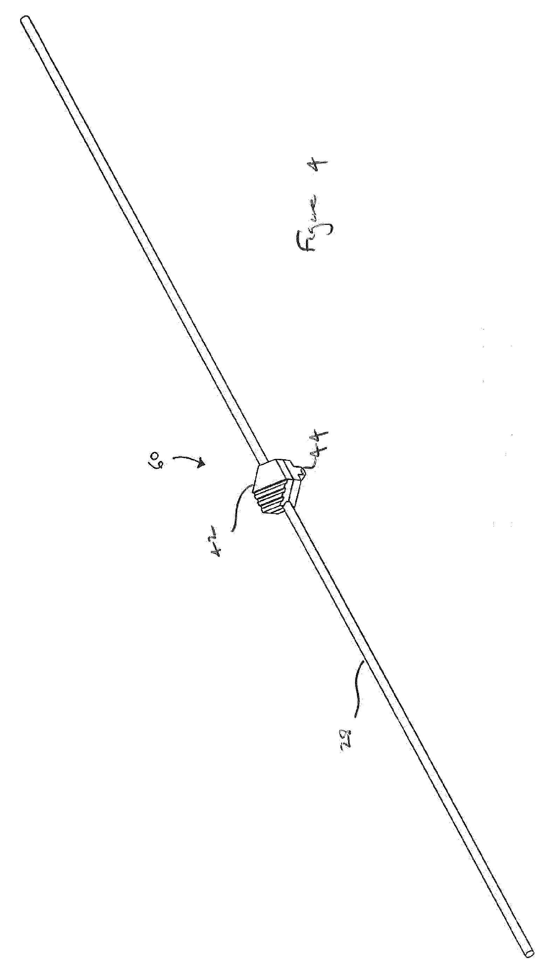

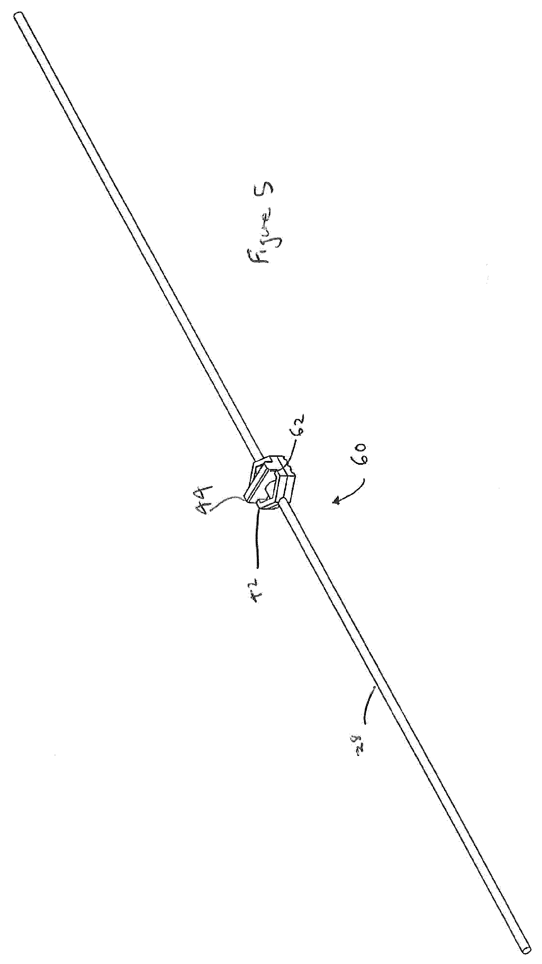

Figure 3 shows a perspective view of the removable cap 30 and cutting filament insert 60. Figure 3 shows the removable cap 30 being rotated through 180 degrees with respect to the view in Figure 2. Figures 4 and 5 show a perspective view of the cutting filament insert 60.

The cutting filament insert 60 comprises a cutting filament 28. In some embodiments the cutting filament 28 is a cutting filament piece of predetermined length. The cutting filament 28 can typically be made from plastic or polymer material. An anchor 42 is fixed to the cutting filament 28 such that the anchor 42 is in the centre of the cutting filament 28 and equal portions of the cutting filament 28 are on each side of the anchor 42. The anchor 42 is for coupling the cutting filament 28 with respect to a retaining means 46 mounted in the removable cap 30 but still allowing removal of the cutting filament 28 from the retaining means 46. The anchor 42 can be any means suitable for coupling with a reciprocal retaining means 46 which comprises a slot 46 in the removable cap 30. In some embodiments the anchor 42 is a tube shaped portion of material such as a ferrule (not shown) and the ferrule comprises a protruding element 44.

The anchor 42 can be formed with a central through hole and the cutting filament 28 is then glued to the anchor 42. Alternatively the anchor 42 can overmoulded to the cutting filament 28. Indeed any suitable means for fixing the anchor 42 to the cutting filament 28 can be used. The anchor 42 can be made from plastic or any other suitable material. In some embodiments the anchor 42 can be made of metal and crimped on to the cutting filament 28.

In some embodiments the anchor 42 is a substantially flat shaped element but the anchor can be any shape suitable for coupling the cutting filament 28 with the cap 30. Figures 4 and 5 show that the anchor 42 is a hexagonal tile with a hexagonal cross section in an axis perpendicular to the longitudinal axis of the cutting filament 28. In other embodiments the anchor 42 can have other cross sectional shapes such as square, triangular, a disc shape or any suitable flat shaped tablet.

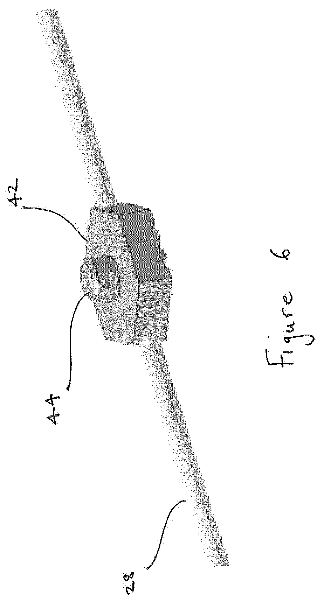

The anchor 42 comprises a protruding element 44. In some embodiments the protruding element is a rib 44 extending along the length of one side of the anchor 42. In some embodiments the rib 44 can extend along the centre of the anchor 42. In some other embodiments the protruding element 44 is a circular peg as shown in Figure 6. Figure 6 shows a cutting filament insert 60 with an alternative structure for the anchor 42. In alternative embodiments the protruding element can be a plurality of pegs and / or ribs.

The rib 44 is slidably mountable in a slot 46 of the removable cap 30. The slot 46 couples with the rib 44 to prevent lateral movement of the anchor 42 towards the through holes 40 and allows movement of the anchor 42 along a path parallel with an axis of rotation A of the removable cap 30. The slot 46 is connected to the base 36 of the removable cap 30. The slot 46 can be located with a minimal radial offset from the axis of rotation A of the removable cap 30. This means less counterweight material 56 needs to be located diametrically opposite the slot 46 in the cap 30 and less material is required to manufacture the cap 30. Furthermore the slot 46 can be located such that the coupling interaction between the rib 44 and the slot 46 is held equidistant from the through holes 40.

The slot 46 comprises a width similar to the width of the rib 44. In this way when the rib 44 is located in the slot 46, the anchor 42 is prevented from moving towards the through holes 40 in the peripheral wall of the removable cap 30. At the same time the anchor 42 is slidable along the length of the slot 46. In some embodiments the side walls 58 of the slot 46 abut against the side walls 62 of the rib 44. In some other embodiments the side walls 58 of the slot 46 are close to the side walls 62 of the rib 44 but are not flush. Alternatively the anchor 42 comprises the slot 46 and the removable cap 30 comprises the rib 44.

This means that the anchor 42 locates and secures the cutting filament insert 60 accurately. Indeed, the anchor 42 is precisely located halfway between the two through holes 40. This makes the cutting head 26 balanced when it rotates.

The slot 46 is located in a first, inner wall 48 of a passageway 50. The first, inner wall 48 of the passageway 50 is closest to the axis of rotation A of the rotary cutting head 26. The passageway 50 is configured to receive the anchor 42 of the cutting filament insert 60. The passageway comprises a second, outer wall 52 and the second wall 52 is further from the axis of rotation A. The second wall 52 is spaced from the first wall 48 by a distance similar to the thickness of the anchor 42. In some embodiments the walls 48, 50 of the passageway are spaced so that walls abut the anchor 42 when the cutting filament insert 60 is mounted in the cap 30. In this way the anchor 42 is mounted with a "push-fit" and sufficient friction is exerted between the walls 48, 52 of the passageway 50 to hold the anchor 42 when the removable cap 30 is rotating. This means that the anchor 42 fits snugly in the passageway and does not accidently come free from the slot 46 during use or otherwise. The friction from the push fit of the anchor 42 with the slot 46 will restrict movement enough so the anchor 42 is not a rattle fit but loose enough to still allow a user to remove the anchor 42 with their finger. This means that the cap does not require clips or cleats to retain the cutting filament. Clips and cleats either require resilient parts to move or require friction to hold the cutting filament tightly. Clips and cleats can become soiled, worn and damaged overtime decreasing their effectiveness. Simply allowing the user to slide the anchor 42 into the slot 46 means the installation of the cutting filament insert 60 is easier.

The second wall 52 comprises a cutaway portion 54. The cutaway portion exposes a portion of the anchor 42 when the anchor 42 is mounted in the slot 46. The cutaway portion 54 allows the user to access the anchor 42 with a finger and slide the anchor 42 out of the slot 46. The anchor 42 in some embodiments is slid out of the slot 46 along a path substantially parallel with the axis of rotation of the rotary cutting head. In some embodiments the slot can be inclined with respect to the axis of rotation of the rotary cutting head. However preferably the path is substantially parallel with the axis of rotation so that the rotational force exerted on the anchor 42 does allow the anchor 42 to slide out and disengage with the slot 46.

The anchor 42 can be fixed to the cap 30 solely by the rib 44 and the slot 46. The protruding element 44 can be mounted in the centre of the anchor 42 and the cutting filament insert 60. This means that the cutting filament insert 60 does not have to be retained at other positions, such as at the periphery of the anchor 42. This means that if a portion of cutting filament does not have a anchor with a protruding element for sliding into a reciprocating slot, then the portion of cutting filament cannot be fixed to the cap. This means that an incorrectly balanced cutting filament or an untested, inappropriate pieces of string like material (e.g. fishing line or metal wire) cannot be used with the vegetation cutting device. This means that the motor is less likely to be damaged because the user will only use filament pieces which have previously been tested and approved for use with the vegetation cutting device.

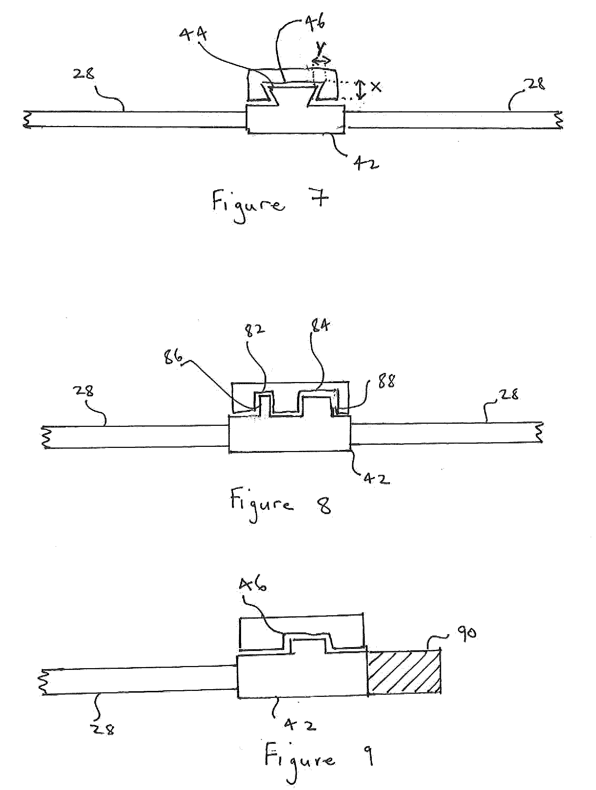

Another variation of the anchor 42 and the slot 46 will now be described with respect to Figure 7. Figure 7 shows a schematic plan view of the cutting filament insert 60 and the removable cap 30 with an alternative structure. The cutting filament 28 in Figure 7 has been partially shown for clarity. Similarly only the slot 46 of the cap 30 has been shown for clarity. The cutting filament insert 60 as shown in Figure 7 is the same as previously described embodiments except that the cross-sectional shape of the protruding element 44 and the slot 46 have a dovetail shape. This means that the protruding element 44 and the slot 46 overlap in two directions as shown by the arrows X and Y. By using a dovetail cross-section, the anchor 42 does not have to be restrained by the second wall 52 of the passageway 50 and this saves on material needed to make the removable cap 30. In some embodiments any suitable cross-sectional shape can be used for restraining the cutting filament insert 60 in two directions. In contrast the other embodiments restrain the anchor 42 with an over lap similar to that shown by arrow X and the second wall 52 of the passageway 50.

Another embodiment will now be discussed in reference to Figure 8. Figure 8 shows a schematic plan view of the cutting filament insert 60 and the removable cap 30 with an alternative structure. The cutting filament insert 60 as shown in Figure 8 is the same as previously described embodiments except that the shape of the protruding element and the slot is different. In some embodiments the protruding element can be a plurality of protruding elements 86, 88 and the slot can be a plurality of reciprocating slots 82, 84. The protruding elements 86, 88 and the slots 82, 84 have a different layout to the embodiments as described with respect to e.g. Figure 3. This means that an anchor 42 with two or more protruding elements cannot be inserted into the removable cap 30 with a single slot 46. The protruding element 86 has a different shape, size and position on the anchor 42 than the other protruding element 88 on the anchor 42. This means that the cutting filament insert 60 can only be inserted in the slots in a single orientation. For example if the user were to turn the cutting filament insert 60 as shown in Figure 8 upside down and then insert it into the slots 82 and 84, the protruding elements 86 88 are in the wrong place and the wrong size to be received in the slots 82 and 84. In one embodiment there may be a rotary cutting head system for a vegetation cutting device comprising; a cutting filament insert having a cutting filament and an anchor mounted thereto, the anchor having a plurality of protruding elements; and a cap comprising a base; a peripheral wall having at least one through hole for receiving the cutting filament; and a plurality of slots mounted on the cap for retaining reciprocal protruding elements of the anchor, each reciprocal protruding element and slot providing a coupling pair, wherein when the cutting filament insert is mounted in the cap, the protruding elements of the anchor are configured to slide into the reciprocal slots and to prevent lateral movement of the anchor towards the at least one through hole and allow the anchor to slide along a path substantially parallel with the axis of rotation of the rotary cutting head and each of the coupling pairs comprise a shape, size and / or relative position different to another coupling pair.

This means that if a cutting filament requires a certain orientation, the user is prevented from incorrectly inserting the cutting filament. Some cutting filament s have a cross section with a serrated edge or teeth and the teeth are designed to be the leading edge of the cutting filament when the cutting filament rotates e.g. the teeth are the first part of the cutting filament to impact the vegetation. Moreover providing multiple cutting filament inserts 60 with different arrangements of slots and protruding elements means that different rated cutting filaments can be sold for different string trimmers and the user cannot insert the wrong cutting filament insert 60 into the vegetation cutting device.

In some embodiments there are two through holes 40 for receiving two ends of cutting filament 28 of the cutting filament insert 60. This means that there are two portions of the same cutting filament insert 60 which can cut vegetation. In some other embodiments there can be a single through hole 40. The single through hole is for receiving one end of the cutting filament 28. The embodiment of the cutting filament with a single cutting portion will now be discussed in reference to Figure 9. Figure 9 is a schematic plan view of the cutting filament insert 60 coupled to the slot 46 of the removable cap 30. The anchor 42 and slot 46 are the same as described with respect to the previous embodiments except that the anchor 42 is not mounted in the centre of the cutting filament 28. Instead the anchor 42 is mounted near or at an end of the cutting filament 28 opposite to the end which protrudes through the through hole 40. In order to make sure the cutting filament insert 60 balances when it rotates, the anchor 42 comprises a counterweight 90.

Embodiments of the present invention have been discussed with particular reference to the examples illustrated. However it will be appreciated that variations and modifications may be made to the examples described within the scope of the invention according to the appended claims.

## Claims

1. A rotary cutting head system (26) for a vegetation cutting device (10) comprising:
a cutting filament insert (60) having a cutting filament (28) and an anchor (42) mounted thereto, and
a cap (30) comprising:
a base (36); and
a peripheral wall (38) having at least one through hole (40) for receiving the cutting filament (28), **characterised in that** there is also provided a protruding element (44) on the anchor and a slot (46) mounted on the cap (30) for retaining the protruding element (44) of the anchor (42),wherein when the cutting filament insert (60) is mounted in the cap (30), the protruding element (44) of the anchor (42) is configured to slide into the slot (46) and to prevent lateral movement of the anchor (42) towards the at least one through hole (40) and to allow the anchor (42) to slide along a path substantially parallel with the axis of rotation of the rotary cutting head (26).

2. A rotary cutting head system according to claim 1 wherein the cap (30) comprises a passageway (50) for receiving the anchor (42) and the passageway comprises a first wall (48) comprising the slot (46).

3. A rotary cutting head system according to claim 2 wherein a second wall (52) of the passageway (50) comprises a cutaway portion (54) configured to show a portion of the anchor (42) when the cutting filament is mounted in the cap (30).

4. A rotary cutting head system according to claims 2 or 3 wherein the anchor (42) is push-fit mountable in the passageway (50).

5. A rotary cutting head system according to any of the preceding claims wherein the protruding element (44) is a rib extending along the anchor (42).

6. A rotary cutting head system according to claim 5 wherein the cross section of the rib is one of the following, square, rectangular, circular, dovetail, hexagonal, triangular.

7. A rotary cutting head system according to any of claims 1 to 4 wherein the protruding element (44) is a round peg.

8. A rotary cutting head system according to any of the preceding claims wherein the at least one through hole (40) is two through holes and the cutting filament (28) extends through both holes.

9. A rotary cutting head system according to any of the preceding claims wherein the anchor (42) is integral with the cutting filament (28).

10. A rotary cutting head system according to any of the preceding claims wherein the anchor (42) is mounted in the centre of the length of cutting filament (28).

11. A cap (30) for mounting in a rotary cutting head (26) for a vegetation cutting device (10), the cap (30) comprising:
a base (36); and
a peripheral wall (38) having at least one through hole (40) for receiving a cutting filament (28), **characterised in that** there is also provided a slot (46) mounted on cap (30) for retaining a cutting filament insert (60) having a cutting filament (28) and an anchor (42) mounted thereto, the anchor (42) having a protruding element (44), wherein the slot (46) is configured to couple with the protruding element (44) and to prevent lateral movement of the anchor (42) towards the at least one through hole (40) and to allow the anchor (42) to slide along a path substantially parallel with the axis of rotation of the rotary cutting head.

12. A cutting filament insert (60) for mounting in a cap (30) for a rotary cutting head (26) of a vegetation cutting device (10), the cap (30) comprising a base (36) and a peripheral wall (38) having at least one through hole (40) for receiving a cutting filament (28), the cutting filament insert (60) comprising:
a cutting filament (28); and
an anchor (42) mounted on the cutting filament (28), **characterised in that** the anchor (42) has a protruding element (44) configured to slide into and couple with a slot (46) mounted on the cap (30) and to prevent lateral movement of the anchor (42) towards the at least one through hole (40) and to allow the anchor to slide along a path substantially parallel with the axis of rotation of the rotary cutting head.

## Patentansprüche

1. Drehschneidkopfsystem (26) für eine Pflanzenschneidvorrichtung (10), umfassend:
- einen Schneidfadeneinsatz (60) mit einem Schneidfaden (28) und einer daran angebrachten Verankerung (42); und
- eine Kappe (30), die
- eine Basis (36); und
- eine Umfangswand (38) mit zumindest einer Durchgangsöffnung (40) zur Aufnahme des Schneidfadens (28) umfasst, **dadurch gekennzeichnet, dass** auch ein vorstehendes Element (44) an der Verankerung und ein Schlitz (46), der an der Kappe (30) angebracht ist, um das vorstehende Element (44) der Verankerung (42) festzuhalten, bereitgestellt sind, wobei das vorstehende Element (44) der Verankerung (42) dann, wenn der Schneidfadeneinsatz (60) in der Kappe (30) angebracht wird, dazu ausgebildet ist, in den Schlitz (46) zu gleiten und eine seitliche Bewegung des Verankerungselements (42) zu der zumindest einen Durchgangsöffnung (40) zu verhindern und zu gestatten, dass die Verankerung (42) entlang eines Pfads, der im Wesentlichen zu der Drehachse des Drehschneidkopfs (26) parallel verläuft, gleitet.

2. Drehschneidkopfsystem nach Anspruch 1, wobei die Kappe (30) einen Durchgang (50) zur Aufnahme der Verankerung (42) umfasst, und der Durchgang eine erste Wand (48) umfasst, die den Schlitz (46) umfasst.

3. Drehschneidkopfsystem nach Anspruch 2, wobei eine zweite Wand (52) des Durchgangs (50) einen Ausschnittbereich (54) umfasst, der dazu ausgebildet ist, einen Teil der Verankerung (42) zu zeigen wenn der Schneidfaden in der Kappe (30) angebracht ist.

4. Drehschneidkopfsystem nach Anspruch 2 oder 3, wobei die Verankerung (42) durch Einpressen in dem Durchgang (50) angebracht werden kann.

5. Drehschneidkopfsystem nach einem der vorhergehenden Ansprüche, wobei das vorstehende Element (44) eine Rippe ist, die sich entlang der Verankerung (42) erstreckt.

6. Drehschneidkopfsystem nach Anspruch 5, wobei der Querschnitt der Rippe eines aus quadratisch, rechteckig, rund, schwalbenschwanzförmig, sechseckig und dreieckig ist.

7. Drehschneidkopfsystem nach einem der Ansprüche 1 bis 4, wobei das vorstehende Element (44) ein runder Zapfen ist.

8. Drehschneidkopfsystem nach einem der vorhergehenden Ansprüche, wobei es sich bei der zumindest einen Durchgangsöffnung (40) um zwei Durchgangsöffnungen handelt und sich der Schneidfaden (28) durch beide Öffnungen erstreckt.

9. Drehschneidkopfsystem nach einem der vorhergehenden Ansprüche, wobei die Verankerung (42) einstückig mit dem Schneidfaden (28) ausgeführt ist.

10. Drehschneidkopfsystem nach einem der vorhergehenden Ansprüche, wobei die Verankerung (42) in der Mitte der Länge des Schneidfadens (28) angebracht ist.

11. Kappe (30) zur Anbringung in einem Drehschneidkopf (26) für eine Pflanzenschneidvorrichtung (10), wobei die Kappe (30)
- eine Basis (36); und
- eine Umfangswand (38) mit zumindest einer Durchgangsöffnung (40) zur Aufnahme eines Schneidfadens (28) umfasst, **dadurch gekennzeichnet, dass** auch ein Schlitz (46) bereitgestellt ist, der an der Kappe (30) angebracht ist, um einen Schneidfadeneinsatz (60) mit einem Schneidfaden (28) und einer daran angebrachten Verankerung (42) festzuhalten, wobei die Verankerung (42) ein vorstehendes Element (44) aufweist, wobei der Schlitz (46) dazu ausgebildet ist, mit dem vorstehenden Element (44) gekoppelt zu werden und eine seitliche Bewegung der Verankerung (42) zu der zumindest einen Durchgangsöffnung (40) zu verhindern und zu gestatten, dass die Verankerung (42) entlang eines Pfads, der im Wesentlichen zu der Drehachse des Drehschneidkopfs parallel verläuft, gleitet.

12. Schneidkopfeinsatz (60) zur Anbringung in einer Kappe (30) für einen Drehschneidkopf (26) einer Pflanzenschneidvorrichtung (10),wobei die Kappe (30) eine Basis (36) und eine Umfangswand (38) mit zumindest einer Durchgangsöffnung (40) zur Aufnahme eines Schneidfadens (28) aufweist, wobei der Schneidfadeneinsatz (60)
- einen Schneidfaden (28); und
- eine Verankerung (42), die an dem Schneidfaden (28) angebracht ist, umfasst, **dadurch gekennzeichnet, dass** die Verankerung (42) ein vorstehendes Element (44) aufweist, das dazu ausgebildet ist, in einen Schlitz (46), der an der Kappe (30) angebracht ist, zu gleiten und damit gekoppelt zu werden, und eine seitliche Bewegung der Verankerung (42) zu der zumindest einen Durchgangsöffnung (40) zu verhindern und zu gestatten, dass die Verankerung entlang eines Pfads, der im Wesentlichen zu der Drehachse des Drehschneidkopfs parallel verläuft, gleitet.

## Revendications

1. Système de tête de coupe rotative (26) pour un dispositif de coupe de végétation (10), comprenant :
un insert de filament de coupe (60) ayant un filament de coupe (28) et une ancre (42) montée sur celui-ci, et
un capuchon (30) comprenant :
une base (36) ; et
une paroi périphérique (38) ayant au moins un trou traversant (40) pour recevoir le filament de coupe (28), **caractérisé en ce qu'**il est également prévu un élément saillant (44) sur l'ancre et une fente (46) ménagée sur le capuchon (30) pour retenir l'élément saillant (44) de l'ancre (42), dans lequel, lorsque l'insert de filament de coupe (60) est monté sur le capuchon (30), l'élément saillant (44) de l'ancre (42) est configuré pour coulisser dans la fente (46) et empêcher un mouvement latéral de l'ancre (42) vers le au moins un trou traversant (40) ainsi que pour permettre à l'ancre (42) de coulisser le long d'un trajet sensiblement parallèle à l'axe de rotation de la tête de coupe rotative (26).

2. Système de tête de coupe rotative selon la revendication 1, dans lequel le capuchon (30) comprend un passage (50) pour recevoir l'ancre (42) et le passage comprend une première paroi (48) comprenant la fente (46).

3. Système de tête de coupe rotative selon la revendication 2, dans lequel une seconde paroi (52) du passage (50) comprend une partie dégagée (54) configurée pour montrer une partie de l'ancre (42) lorsque le filament de coupe est monté dans le capuchon (30).

4. Système de tête de coupe rotative selon les revendications 2 ou 3, dans lequel l'ancre (42) peut être montée par poussée dans le passage (50).

5. Système de tête de coupe rotative selon l'une quelconque des revendications précédentes, dans lequel l'élément saillant (44) est une nervure s'étendant le long de l'ancre (42).

6. Système de tête de coupe rotative selon la revendication 5, dans lequel la section transversale de la nervure est l'une des suivantes : carrée, rectangulaire, circulaire, en queue d'aronde, hexagonale, triangulaire.

7. Système de tête de coupe rotative selon l'une quelconque des revendications 1 à 4, dans lequel l'élément saillant (44) est une goupille ronde.

8. Système de tête de coupe rotative selon l'une quelconque des revendications précédentes, dans lequel le au moins un trou traversant (40) est formé de deux trous traversants et le filament de coupe (28) s'étend à travers les deux trous.

9. Système de tête de coupe rotative selon l'une quelconque des revendications précédentes, dans lequel l'ancre (42) est formée d'un seul tenant avec le filament de coupe (28).

10. Système de tête de coupe rotative selon l'une quelconque des revendications précédentes, dans lequel l'ancre (42) est montée au centre de la longueur du filament de coupe (28).

11. Capuchon (30) pour montage dans une tête de coupe rotative (26) pour un dispositif de coupe de végétation (10), le capuchon (30) comprenant :
une base (36) ; et
une paroi périphérique (38) ayant au moins un trou traversant (40) pour recevoir un filament de coupe (28), **caractérisé en ce qu'**il est également prévu une fente (46) ménagée sur le capuchon (30) pour retenir un insert de filament de coupe (60) ayant un élément de coupe (28) et une ancre (42) montée sur celui-ci, l'ancre (42) ayant un élément saillant (44), dans lequel la fente (46) est configurée pour se coupler avec l'élément saillant (44) et empêcher un mouvement latéral de l'ancre (42) vers le au moins un trou traversant (40) ainsi que pour permettre à l'ancre (42) de coulisser le long d'un trajet sensiblement parallèle à l'axe de rotation de la tête de coupe rotative.

12. Insert de filament de coupe (60) pour monter dans un capuchon (30) pour une tête de coupe rotative (26) d'un dispositif de coupe de végétation (10), le capuchon (30) comprenant une base (36) et une paroi périphérique (38) ayant au moins un trou traversant (40) pour recevoir un filament de coupe (28), l'insert de filament de coupe (60) comprenant :
un filament de coupe (28) ; et
une ancre montée sur le filament de coupe (28), **caractérisé en ce que** l'ancre (42) a un élément saillant (44) configuré pour coulisser et se coupler avec une fente (46) ménagée sur le capuchon (30) et empêcher un mouvement latéral de l'ancre (42) vers le au moins un trou traversant (40) ainsi que pour permettre à l'ancre de coulisser le long d'un trajet sensiblement parallèle à l'axe de rotation de la tête de coupe rotative.
